# EUROPEAN PATENT APPLICATION

(11) **EP 4 495 822 A1**
(43) Date of publication of application: **22.01.2025**
(21) Application number: 23746508.3
(22) Date of filing: 09.03.2023
(51) Int. Cl.: G06F 30/33

(54) **TRIGGER UNIT PERFORMING CLOCK GATING BASED ON DATA COMPARISON**

(30) Priority: 28.01.2022 CN 202210107334
(71) Applicant: Hangzhou Silan Microelectronics Co., Ltd., Hangzhou, Zhejiang 310012 (CN)
(72) Inventor: SONG, Weiquan, Hangzhou, Zhejiang 310012 (CN); CHEN, Xiangdong, Hangzhou, Zhejiang 310012 (CN)
(74) Representative: Bals & Vogel Patentanwälte PartGmbB
(86) International application number: PCT/CN2023/080589
(87) International publication number: WO 2023/143632

(57) **Abstract**

A flip-flop with clock gating based on data comparison is disclosed. The flip-flop unit includes an edge-triggered flip-flop and a clock gating circuit. The clock gating circuit enables or disables a first clock signal to generate a second clock signal according to a data comparison result of input data and output data. The second clock signal provides a triggering edge of the edge-triggered flip-flop. The clock gating circuit copies the first clock signal as the second clock signal in a clock cycle during which the input data is flipped, and maintains the second clock signal at a predetermined level in clock cycles during which the input data remains unchanged. The flip-flop unit enables the clock flip of the edge-triggered flip-flop only in a clock cycle during which the input data is flipped, thereby improving the circuit performance and reducing the power consumption.

## Description

This application claims priority to the Chinese invention application No. 202210107334.3, filed on Jan. 28, 2022, and entitled "FLIP-FLOP WITH CLOCK GATING BASED ON DATA COMPARISON", the content of which is incorporated herein by reference, including all of the specification, the claims, the drawings and the abstract.

### FIELD OF TECHNOLOGY

The present disclosure relates to integrated circuit technology, and more particularly, to a flip-flop with clock gating based on data comparison.

### BACKGROUND

Electronic Design Automation (EDA) software is an important tool for functional design, synthesis, verification, physical design and other processes of integrated circuits. In the digital circuit design with EDA, a standard cell library is the basic part of the back-end design process of the integrated circuit chip. The design efficiency can be improved by using pre-designed and optimized library cells for automatic logic synthesis and layout placement and routing. Optimized library cells can improve circuit performance and reduce power consumption.

In the digital part of an integrated circuit, gate circuits may be used to generate a logical operation result from a plurality of signals by combinational logical operations. An edge-triggered flip-flop may be used to store the logical operation result. According to the different logical operations, gate circuits can be divided into AND gate, OR gate, NOT gate, NAND gate, AND-OR gate, XOR gate, and so on. The logical operation result of the gate circuits is, for example, a pulse signal. A steady-state level signal is generated according to the pulse signal, and corresponds to a logic state.

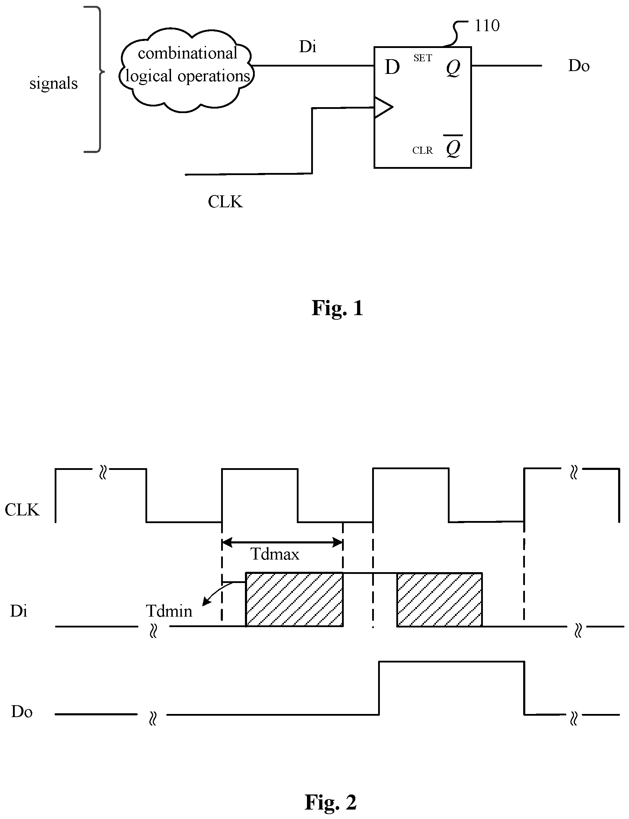

The edge-triggered flip-flop is an information storage device with memory function, for storing and memorizing the logical operation result. For example, the edge-triggered flip-flop is an important unit circuit in digital circuit modules, because it is the most-basic logic unit in a variety of timing digital circuit modules. Referring to FIGs. 1 and 2, depending on the type of the edge-triggered flip-flop, the edge-triggered flip-flop 110 is triggered at a rising edge or a falling edge of a clock signal to transmit input data from an input terminal to an output terminal to obtain output data. The edge-triggered flip-flop 110 is, for example, a D-type flip-flop. For example, the D-type flip-flop transmits data on a triggering edge of the clock signal and holds the data until a next triggering edge.

The power consumption of edge-triggered flip-flop includes static power consumption and dynamic power consumption. The static power consumption is mainly caused by a leakage current, and the dynamic power consumption is mainly caused by power consumption for signal flipping. The flipping of a data signal of the edge-triggered flip-flop results in additional data power consumption of subsequent-stage combinational logic units, and the flipping of a clock signal also results in the clock power consumption of the edge-triggered flip-flop itself.

Therefore, it is expected to optimize the design of edge-triggered flip-flops in the standard cell library of an EDA tool of digital circuits and further reduce dynamic power consumption of edge-triggered flip-flops.

### SUMMARY OF THE DISCLOSURE

In view of the above problems, it is an object of the present disclosure to provide a flip-flop with clock gating based on data comparison, which enables clock flipping of an edge-triggered flip-flop only in a clock cycle during which input data is flipped, so as to improve circuit performance and reduce power consumption.

According to one aspect of the present disclosure, there is provided a flip-flop unit, comprising: an edge-triggered flip-flop having a data input terminal, a clock input terminal, and a first data output terminal, and a clock gating circuit having a first input terminal, a second input terminal, a clock input terminal and an output terminal, wherein the first input terminal of the clock gating circuit receives input data of the edge-triggered flip-flop, the second input terminal of the clock gating circuit receives output data of the edge-triggered flip-flop, the clock input terminal of the clock gating circuit receives a first clock signal, and the output terminal of the clock gating circuit is coupled to the clock input terminal of the edge-triggered flip-flop to provide a second clock signal, the clock gating circuit enables or disables the first clock signal to generate the second clock signal according to a data comparison result of the input data and the output data, so that the second clock signal provides a triggering edge of the edge-triggered flip-flop, the clock gating circuit copies the first clock signal as the second clock signal in a clock cycle during which the input data is flipped, and maintains the second clock signal at a predetermined level in clock cycles during which the input data remains unchanged.

Optionally, each clock cycle of the first clock signal has a first-level phase and a second-level phase successively, and the input data is flipped in the first-level phase of the first clock signal.

Optionally, the predetermined level is a level of the first-level phase, and the second clock signal provides a triggering edge in the next clock cycle following the clock cycle during which the input data is flipped.

Optionally, a starting edge of the first-level phase is a rising edge.

Optionally, the clock gating circuit comprises: an XOR gate having a first input terminal, a second input terminal and an output terminal, the first input terminal and the second input terminal respectively receiving the input data and the output data of the edge-triggered flip-flop, and the output terminal providing a first clock control signal; an OR gate having a first input terminal, a second input terminal, and an output terminal, the first input terminal receiving the first clock signal, and a NOT gate having an input terminal and an output terminal, the NOT gate being coupled between the output terminal of the XOR gate and the second input terminal of the OR gate, wherein the first clock control signal is inverted by the NOT gate and then the inverted first clock control signal is provided to the second input terminal of the OR gate, and the output terminal of the OR gate provides the second clock signal.

Optionally, the OR gate further comprises a third input terminal receiving an inverted signal of the second clock control signal.

Optionally, the clock gating circuit enables a data comparison function when the second clock control signal is valid, and the clock gating circuit disables data comparison function when the second clock control signal is invalid.

Optionally, a starting edge of the first-level phase is a falling edge.

Optionally, the clock gating circuit comprises: an XOR gate having a first input terminal, a second input terminal, and an output terminal, the first input terminal and the second input terminal receiving the input data and the output data of the edge-triggered flip-flop, respectively, and the output terminal providing a first clock control signal; and an AND gate having a first input terminal, a second input terminal, and an output terminal, the first input terminal receiving the first clock signal, the second input terminal receiving the first clock control signal, and the output terminal providing the second clock signal.

Optionally, the AND gate further comprises a third input terminal, and the third input terminal receives a second clock control signal.

Optionally, the clock gating circuit enables a data comparison function when the second clock control signal is valid, and the clock gating circuit disables data comparison function when the second clock control signal is invalid.

Optionally, the data input terminal of the edge-triggered flip-flop receives an inverted signal of the output data of the edge-triggered flip-flop as input data.

Optionally, the edge-triggered flip-flop further comprises a second data output terminal, and provides the output data of the edge-triggered flip-flop at the first data output terminal, and provides the inverted signal of the output data at the second data output terminal, wherein the data input terminal and the second data output terminal of the edge-triggered flip-flop are coupled to each other to receive the inverted signal of the output data.

Optionally, each of the first clock control signal and the second clock control signal indicates a valid state with a high level and an invalid state with a low level.

Optionally, the edge-triggered flip-flop receives the input data at the data input terminal and transmits the input data to the first data output terminal at the triggering edge.

According to an embodiment of the present disclosure, in a flip-flop unit, a clock gating circuit copies a first clock signal as a second clock signal in a clock cycle during which input data is flipped, and maintains the second clock signal at a predetermined level in clock cycles during which the input data remains unchanged. Therefore, the clock gating circuit enables transmission of the clock signal only in a clock cycle during which the input data of the edge-triggered flip-flop is flipped, so that dynamic power consumption of the edge-triggered flip-flop due to clock flipping can be minimized. Furthermore, the clock gating circuit provides a triggering edge only in the next clock cycle following the clock cycle during which the input data of the edge-triggered flip-flop is flipped, so that dynamic power consumption of the edge-triggered flip-flop due to data transmission can be minimized.

Furthermore, the edge-triggered flip-flop prevents data from entering subsequent-stage digital circuits in most clock cycles during which the input data remains unchanged, so that additional data power consumption in the subsequent-stage combinational logic units for flipping data signal can be avoided.

In the flip-flop unit, the glitch in the clock signal generated by the clock gating control circuit can be eliminated by the circuit characteristic of the clock gate control circuit in a clock cycle during which the clock control signal is flipped, the number of logic devices in the clock gating control circuit can be reduced, and the power consumption of the clock gating control circuit can be reduced, even if the clock gating control circuit omits an additional latch. Due to the low operating power consumption of the clock gating circuit itself, the increased power consumption due to the power consumption of the clock gating circuit itself is much less than the reduced power consumption of the edge-triggered flip-flop by clock gating.

Furthermore, any number of edge-triggered flip-flops in a flip-flop unit may share a clock gating circuit to form a flip-flop group. In a case that the flip-flop group contains any number of edge-triggered flip-flops, for example, one, two, or more, the flip-flop unit can always achieve the power consumption reduction.

Furthermore, signal delay of the input data of the edge-triggered flip-flop may be predetermined with a minimum delay and a maximum delay both at a first-level phase of the clock signal in the design of the digital circuit, so as to avoid that the edge-triggered flip-flop can not operate normally due to the glitch in the clock signal of the edge-triggered flip-flop. Even if the circuit design of the clock gating circuit in the flip-flop unit is simplified, clock flipping and data transmission of the edge-triggered flip-flop can still be reliably disabled to reduce dynamic power consumption.

Furthermore, the circuit design of the flip-flop unit is simplified and the layout area is reduced. The flip-flop unit may be added as a library cell in a standard cell library, in addition to the conventional edge-triggered flip-flop design, and may be selected under different conditions to improve the performance and design efficiency of a digital circuit.

In a preferred embodiment, the data input terminal of the edge-triggered flip-flop receives an inverted signal of the output data as the input data. The edge-triggered flip-flop includes a first data output terminal and a second data output terminal, which provide output data and an inverted signal of the output data of the edge-triggered flip-flop, respectively. The data input terminal and the second data output terminal of the edge-triggered flip-flop are coupled to each other. On one hand, a previous-stage logic circuit merely needs to provide input data to the clock gating circuit in the flip-flop unit, and does not need to provide the input data to the edge-triggered flip-flop in the flip-flop unit, so that the load stress of the previous-stage logic circuit can be reduced. On the other hand, the edge-triggered flip-flop does not need to receive any input data from the outside, so that an adverse effect of the signal delay fluctuation of the input data from the outside on operation stability of the edge-triggered flip-flop can be reduced.

### BRIEF DESCRIPTION OF THE DRAWINGS

The above and other objects, features and advantages of the present disclosure will become more apparent from the following description of embodiments of the present disclosure with reference to the accompanying drawings.
FIG. 1 shows a schematic circuit diagram of an edge-triggered flip-flop in an integrated circuit.
FIG. 2 shows a waveform diagram of an edge-triggered flip-flop in an integrated circuit.
FIG. 3 shows a schematic circuit diagram of a flip-flop unit according to the prior art.
FIG. 4 shows a schematic circuit diagram of another flip-flop unit according to the prior art.
FIG. 5 shows a schematic circuit diagram of a clock gating circuit in the flip-flop unit shown in FIG. 4.
FIG. 6 shows a waveform diagram of a clock gating circuit in the flip-flop unit shown in FIG. 4.
FIG. 7 shows a schematic circuit diagram of a flip-flop unit according to a first embodiment of the present disclosure.
FIG. 8 shows a schematic circuit diagram of a clock gating circuit in the flip-flop unit shown in FIG. 7.
FIG. 9 shows a schematic circuit diagram of another clock gating circuit in the flip-flop unit shown in FIG. 7.
FIG. 10 shows a waveform diagram of the clock gating circuit shown in FIG. 8.
FIG. 11 shows a waveform diagram of the clock gating circuit shown in FIG. 9.
FIG. 12 shows a schematic circuit diagram of a flip-flop unit according to a second embodiment of the disclosure.
FIG. 13 shows a schematic circuit diagram of a clock gating circuit in the flip-flop unit shown in FIG. 12.
FIG. 14 shows a schematic circuit diagram of a flip-flop unit according to a third embodiment of the present disclosure.
FIG. 15 shows a schematic circuit diagram of a clock gating circuit in the flip-flop unit shown in FIG. 14.

### DESCRIPTION OF THE EMBODIMENTS

Hereinafter, that present disclosure will be describe in more detail with reference to the accompanying drawings. Like elements in the various drawings are identified with like reference numerals. For the sake of clarity, various portions of the drawings have not been drawn to scale. In addition, some well-known parts may not be shown.

Numerous specific details of the disclosure, such as device structures, materials, dimensions, processes, and techniques, are set forth in the following description in order to provide a clearer understanding of the disclosure. It will be understood by those skilled in the art that the present disclosure may be practiced without these specific details.

The present disclosure may be embodied in various forms, some examples of which are described below. For the convenience of description, the following description of the embodiments takes an edge-triggered flip-flop triggered by a rising edge as an example.

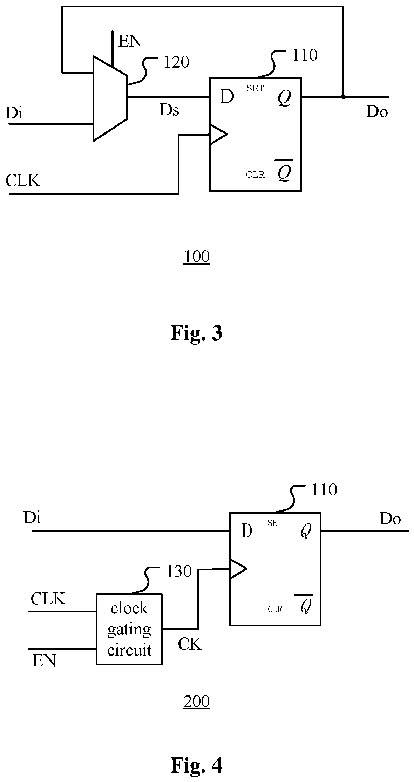

FIG. 3 shows a schematic circuit diagram of a flip-flop unit according to the prior art. The flip-flop unit 100 includes an edge-triggered flip-flop 110 and a data selector 120. The data selector 120 is used for gating of the input data Di of the edge-triggered flip-flop 110. In this embodiment, the edge-triggered flip-flop 110 is, for example, a D-type flip-flop.

The edge-triggered flip-flop 110 includes a data input terminal, a data output terminal, and a clock input terminal. The data selector 120 includes a control terminal, a first data input terminal, a second data input terminal, and an output terminal. The data selector 120 receives a data control signal EN at the control terminal, receives the input data Di of the edge-triggered flip-flop 110 at the first data input terminal, receives output data Do of the edge-triggered flip-flop 120 at the second data input terminal, and provides the selected data Ds at the output terminal. The edge-triggered flip-flop 110 receives the selected data Ds at the data input terminal, receives the clock signal CLK at the clock input terminal, and provides the output data Do at the data output terminal.

The edge-triggered flip-flop 110 transmits the input data from the data input terminal to the data output terminal at a triggering edge, e.g., a rising edge, of the clock signal CLK. Thus, the output data at the data output terminal of the edge-triggered flip-flop 110 has a signal level that corresponds to a signal level of the input data at the data input terminal just before the rising edge of the clock signal CLK, and maintains the signal level unchanged for one clock cycle after the rising edge of the clock signal CLK. The data output terminal of the edge-triggered flip-flop 110 may include two complementary output terminals.

The data selector 120 provides the input data Di to the input terminal of the edge-triggered flip-flop 110 in a case that the data control signal EN is valid, and couples the first input terminal and the output terminal of the edge-triggered flip-flop 110 to each other in a case that the data control signal EN is invalid, thereby disabling the input data of the edge-triggered flip-flop 110. The data selector 120 will also maintain the output data of the edge-triggered flip-flop 110 unchanged, and thus data input of the edge-triggered flip-flop 110 may be disabled.

In the flip-flop unit described above, the data selector 120 controls data input of the edge-triggered flip-flop 110 according to the state of the data control signal EN.

In a case that the data selector 120 disables data input of the edge-triggered flip-flop 110, the edge-triggered flip-flop 110 cannot receive the input data, but maintains the output data unchanged, so that the input data can be prevented from entering subsequent-stage digital circuits, which avoids additional data power consumption to be caused by data signal flipping performed by subsequent-stage combinational logic units.

However, the data selector 120 cannot disable clock flipping of the edge-triggered flip-flop 110. The clock input terminal of the edge-triggered flip-flop 110 always receives the clock signal CLK. Since data transmission occurs at a triggering edge of the clock signal CLK, dynamic power consumption of the edge-triggered flip-flop 110 due to flipping of the clock signal CLK cannot be reduced.

FIG. 4 shows a schematic circuit diagram of another flip-flop unit according to the prior art. The flip-flop unit 200 includes an edge-triggered flip-flop 110 and a clock gating circuit 130. The clock gating circuit 130 is used for gating a clock signal CK of the edge-triggered flip-flop 110. In this embodiment, the edge-triggered flip-flop 110 is, for example, a D-type flip-flop.

The edge-triggered flip-flop 110 includes a data input terminal, a data output terminal, and a clock input terminal. The clock gating circuit 130 includes an input terminal, an output terminal, and a control terminal. The clock gating circuit 130 receives a clock signal CLK at the input terminal, provides a clock signal CK at the output terminal, and receives a clock control signal EN at the control terminal. The edge-triggered flip-flop 110 receives the input data Di at the data input terminal, receives the clock signal CK at the clock input terminal, and provides the output data Do at the data output terminal.

The edge-triggered flip-flop 110 transmits the input data from the data input terminal to the data output terminal at a triggering edge, e.g., a rising edge, of the clock signal CK. Thus, the output data at the data output terminal of the edge-triggered flip-flop 110 has a signal level that corresponds to a signal level of the input data at the data input terminal just before the triggering edge of the clock signal CK, and maintains the signal level unchanged for one clock cycle after the triggering edge of the clock signal CK. The data output terminal of the edge-triggered flip-flop 110 may include two complementary output terminals.

The clock gating circuit 130 performs combinational logical operations on the input data Di, the output data Do, and the clock signal CLK to generate the clock signal CK of the edge-triggered flip-flop 110.

In the above-described flip-flop unit, the clock gating circuit 130 controls transmission of the clock signal according to the state of the clock control signal EN.

The clock gating circuit 130 copies the clock signal CLK as the clock signal CK, which is provided to the clock input terminal of the edge-triggered flip-flop 110, in clock cycles during which the clock control signal EN maintains to be valid, and disables the clock signal CLK in clock cycles during which the clock control signal EN maintains to be invalid, and maintains that clock signal CK at a predetermined level.

In a case that the clock signal CK is maintained at the predetermined level, the clock signal CK cannot provide the triggering edge of the edge-triggered flip-flop 110, and thus clock flipping and data transmission of the edge-triggered flip-flop 110 may be disabled, and thus dynamic power consumption of the edge-triggered flip-flop 110 due to flipping of the clock signal CK and the dynamic power consumption due to data transmission may be reduced. Furthermore, the edge-triggered flip-flop 110 prevents data from entering subsequent-stage digital circuits, so as to avoid additional data power consumption to be caused by data signal flipping performed by subsequent-stage combinational logic units.

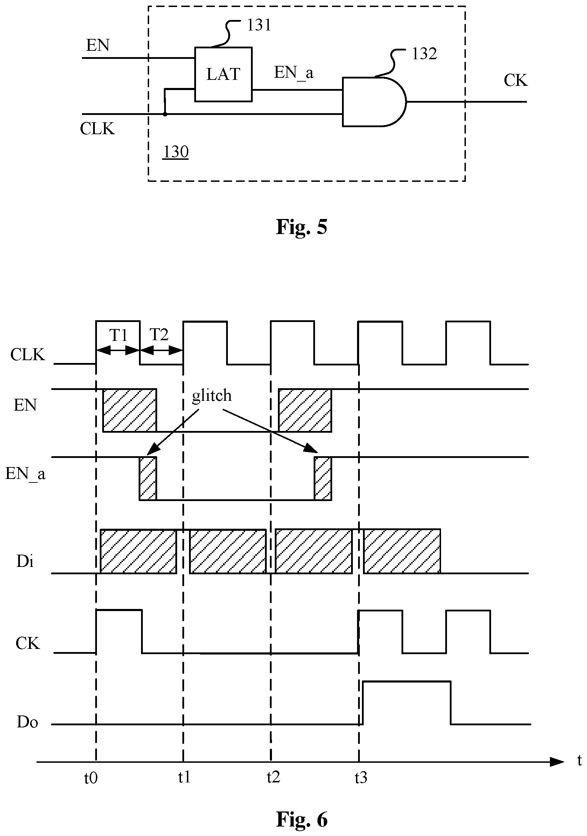

FIG. 5 shows a schematic circuit diagram of a clock gating circuit in the flip-flop unit shown in FIG. 4. Referring to FIG. 4, the clock gating circuit 130 and the edge-triggered flip-flop 110 together constitute a flip-flop unit, and the clock gating circuit 130 provides a clock signal CK to the edge-triggered flip-flop 110.

The clock gating circuit 130 includes a latch 131 and an AND gate 132. The latch 131 latches the clock control signal EN at a first-level phase T1 of the clock signal CLK, and transmits the clock control signal EN at a second-level phase T2 of the clock signal CLK. The AND gate performs a logical AND operation on a latched signal EN_a and the clock signal CLK to generate the clock signal CK.

The latch 131 includes a first input terminal, a second input terminal, and an output terminal. The AND gate 132 includes a first input terminal, a second input terminal, and an output terminal. The latch 131 receives the clock signal CLK at the first input terminal receiving, and receives the clock control signal EN at the second input terminal. The AND gate 132 receives the clock signal CLK at the first input terminal, with the second input terminal being coupled to the output terminal of the latch 131, and provides the clock signal CK at the output terminal.

A rising-edge-triggered flip-flop will be taken as an example for illustration, while the clock control signal EN indicates a valid state with a high level and an invalid state with a low level. Each clock cycle of the clock signal CLK includes a first-level phase T1 and a second-level phase T2 successively between adjacent rising edges. The first-level phase T1 and the second-level phase T2 have a high level and a low level, respectively. The clock signal CK provides a triggering edge of the edge-triggered flip-flop 110 at which the edge-triggered flip-flop 110 transmits the input data from the input terminal to the output terminal.

Referring to FIG. 6, each of the input data Di and the clock control signal EN has signal delay Td with respect to an edge of the clock signal. A range between a minimum delay Tdmin and a maximum delay Tdmax of the signal delay Td is hatched. The signal delay Td of the clock control signal EN varies between the minimum delay Tdmin and the maximum delay Tdmax.

As shown in FIG. 6, the minimum delay Tdmin and the maximum delay Tdmax are respectively at the first-level phase T1 and the second-level phase T2, and the flipping of the clock control signal EN may occur in the first-level phase T1 of the clock signal CLK, or in the second-level phase T2 of the clock signal CLK.

At time t0, the clock signal CLK reaches a first rising edge and the clock control signal EN is valid. In one clock cycle after time t0, the clock control signal EN is flipped from a valid state to an invalid state. At the first-level phase T1 of the clock signal CLK, a signal level of the latched signal EN_a at the output terminal of the latch 131 is maintained at the previous state, that is, a high level. At the second-level phase T2 of the clock signal CLK, the latch 131 transmits the clock control signal EN from the input terminal to the output terminal.

If the signal delay Td of the clock control signal EN is less than or equal to the first-level phase T1 of the clock signal CLK, the latched signal EN_a is a replica of the clock signal CLK in a clock cycle during which the clock control signal is flipped. If the signal delay Td of the clock control signal EN is greater than the first-level phase T1 of the clock signal CLK, a glitch occurs on the latched signal EN_a in the second-level phase T2 of the clock signal CLK. The clock signal CK is the result of a logical AND operation of the clock signal CLK and the latched signal EN_a, and the logical AND operation can eliminate the glitch of the latched signal EN_a at the second-level phase T2 of the clock signal CLK.

Therefore, in a clock cycle from time t0, the clock gating circuit 130 copies the clock signal CLK as the clock signal CK and provides a rising edge of the clock signal CK, and the output data Do of the edge-triggered flip-flop 110 has a signal level that corresponds to a signal level of the input data Di at time t0, for example, a low level as shown in FIG. 6.

At time t1, the clock signal CLK reaches a second rising edge and the clock control signal EN is invalid. The clock control signal EN is maintained in an invalid state for one clock cycle after time t1. At the first-level phase T1 of the clock signal CLK, the signal level of the latched signal EN_a at the output terminal of the latch 131 is maintained at the previous state, that is, a low level. At the second-level phase T2 of the clock signal CLK, the latch 131 transmits the clock control signal EN from the input terminal to the output terminal. In this clock cycle, the clock control signal EN is maintained at a low level, so that the clock signal EN_a is also maintained at a low level, and the clock signal CK is also maintained at a low level as a result of a logical AND operation of the clock signal CLK and the latched signal EN_a.

At time t2, the clock signal CLK reaches a third rising edge and the clock control signal EN is invalid. In one clock cycle after time t2, the clock control signal EN is flipped from an invalid state to a valid state. At the first-level phase T1 of the clock signal CLK, the signal level of the latched signal EN_a at the output terminal of the latch 131 is maintained at the previous state, that is, a low level. At the second-level phase T2 of the clock signal CLK, the latch 131 transmits the clock control signal EN from the input terminal to the output terminal. If the signal delay Td of the clock control signal EN is less than or equal to the first-level phase T1 of the clock signal CLK, the latched signal EN_a is a replica of the clock signal CLK in a clock cycle during which the clock control signal is flipped. If the signal delay Td of the clock control signal EN is greater than the first-level phase T1 of the clock signal CLK, a glitch occurs on the latched signal EN_a in the second-level phase T2 of the clock signal CLK. The clock signal CK is the result of a logical AND operation of the clock signal CLK and the latched signal EN_a. The logical AND operation can eliminate the glitch of the latched signal EN_a at the second-level phase T2 of the clock signal CLK.

Therefore, in the two clock cycles from time t1, the clock gating circuit 130 disables the clock signal CLK and does not provide a rising edge of the clock signal CK. The signal level of the output data Do of the edge-triggered flip-flop 110 corresponds to the signal level in the previous clock cycle, for example, a low level as shown in FIG. 6.

At time t3, the clock signal CLK reaches a fourth rising edge and the clock control signal EN is valid. The clock control signal EN maintains a valid state in a clock cycle from time t3. At the first-level phase T1 of the clock signal CLK, the signal level of the latched signal EN_a at the output terminal of the latch 131 is maintained at the previous state, that is, a high level. At the second-level phase T2 of the clock signal CLK, the latch 131 transmits the clock control signal EN from the input terminal to the output terminal. In this clock cycle, the clock control signal EN is maintained at a high level. Therefore, the latched signal EN_a is also maintained at a high level. The clock signal CK is the result of a logical AND operation of the clock signal CLK and the latched signal EN_a. Therefore, the clock signal CK is a replica of the clock signal CLK.

Therefore, in a clock cycle from time t3, the clock gating circuit 130 copies the clock signal CLK as the clock signal CK and provides a rising edge of the clock signal CK. The signal level of the output data Do of the edge-triggered flip-flop 110 corresponds to the signal level of the input data Di at time t3, for example, a high level as shown in FIG. 5.

The above-described clock gating circuit 130 controls transmission of the clock signal according to the state of the clock control signal EN.

The clock gating circuit 130 copies the clock signal CLK as the clock signal CK in a clock cycle during which the clock control signal EN is flipped from a valid state to an invalid state. In such a case, the clock signal CK provides the triggering edge of the edge-triggered flip-flop 110. The clock gating circuit 130 allows clock flipping and data transmission of the edge-triggered flip-flop 110, and the output data Do provided by the edge-triggered flip-flop 110 is the input data Di at the current triggering edge.

The clock gating circuit 130 disables the clock signal CLK and maintains the clock signal CK at a predetermined level in a clock cycle during which the clock control signal EN is flipped from an invalid state to a valid state. In such a case, the clock signal CK fails to provide the triggering edge of the edge-triggered flip-flop 110, the clock gating circuit 130 disables clock flipping and data transmission of the edge-triggered flip-flop 110. The edge-triggered flip-flop 110 maintains the input data Di at the previous triggering edge, so that dynamic power consumption of the edge-triggered flip-flop 110 can be reduced.

The clock gating circuit 130 described above has no strict requirement on the timing of the clock control signal EN. If it is desired to disable data transmission at a predetermined time, the flipping of the clock control signal EN from a valid state to an invalid state may be completed in the last entire clock cycle just before the predetermined time, and the flipping of the clock control signal EN from an invalid state to a valid state may be completed in the last clock cycle after the predetermined time.

The inventors notice that flip-flop units provided in a standard cell library of the EDA tool of digital circuits are implemented with the clock gating circuit 130 described above. The clock gating circuit 130 includes a latch 131 for eliminating a glitch that may occur on the clock signal CK of the edge-triggered flip-flop 110.

However, too much hardware logic is needed in the latch 131, resulting in too high operating power consumption of the clock gating circuit 130 itself. The operating power consumption of the clock gating circuit 130 itself may even exceed the reduced power consumption of the edge-triggered flip-flop with clock gating. In a flip-flop unit, the clock gating circuit 130 may provide the clock signal CK to a plurality of edge-triggered flip-flops 110 in a flip-flop group. If the clock gating circuit 130 is used, there is a restriction in the circuit design that the number of the edge-triggered flip-flops in the flip-flop group is not less than 3 to 8, so as to ensure that the operating power consumption of the clock gating circuit 130 of the flip-flop unit 200 is less than the reduced power consumption of the plurality of edge-triggered flip-flops 110 by the clock gating circuit 130.

Furthermore, the inventors notice that the signal delay of the input data of the edge-triggered flip-flop 110 may be predetermined in design stage to occur in a single-level phase of the clock signal CLK. By comparing the input data and the output data of the edge-triggered flip-flop 110, a clock control signal EN_a with the same signal delay may be obtained.

The inventors have designed clock gating circuits 330 and 430 with data comparison, which will be described in detail below. The same function as the clock gating circuit 130 can be obtained without using a latch, based on a clock control signal EN which is obtained with data comparison to a redesigned logic circuit.

The clock gating circuit 330 and the clock gating circuit 430 may be added for a redesigned flip-flop unit in a standard cell library of an EDA tool of digital circuits. Therefore, the power consumption of the integrated circuit can be further reduced, the cost of the flip-flop unit can be reduced, and the power consumption of the clock gating circuit can be reduced, thereby breaking through the restriction in the circuit design.

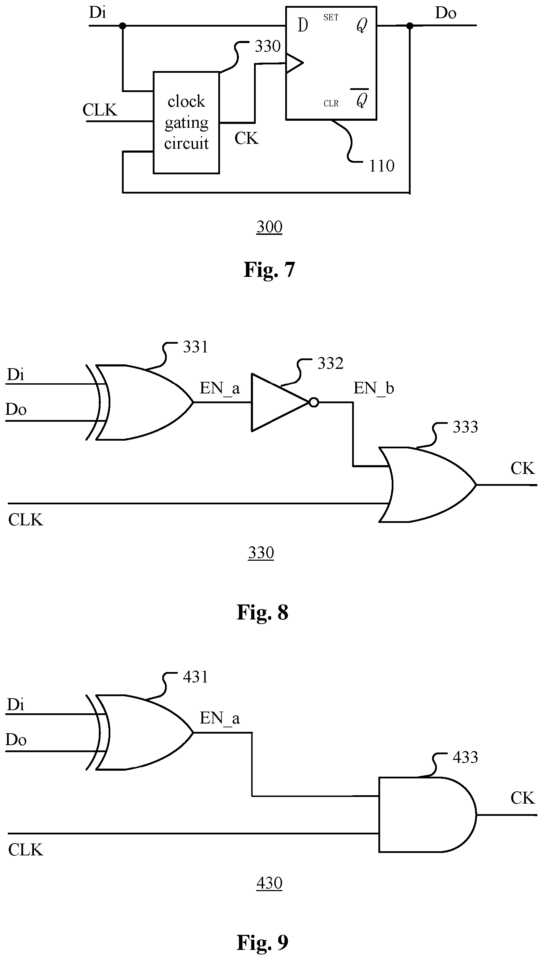

FIG. 7 shows a schematic circuit diagram of a flip-flop unit according to a first embodiment of the present disclosure. The flip-flop unit 300 includes an edge-triggered flip-flop 110 and a clock gating circuit 330. The clock gate circuit 330 is used for gating a clock signal CK of the edge-triggered flip-flop 110. In this embodiment, the edge-triggered flip-flop 110 is, for example, a D-type flip-flop.

The edge-triggered flip-flop 110 includes a data input terminal, a data output terminal, and a clock input terminal. The clock gating circuit 330 includes a first input terminal, a second input terminal, a clock input terminal, and a clock output terminal. The clock gating circuit 330 receives input data Di at the first input terminal, receives output data Do at the second input terminal, receives a clock signal CLK at the clock input terminal, and provides the clock signal CK at the clock output terminal. The edge-triggered flip-flop 110 receives the input data Di at the data input terminal, receives the clock signal CK at the clock input terminal, and provides the output data Do at the data output terminal.

The edge-triggered flip-flop 110 transmits the input data from the data input terminal to the data output terminal at a triggering edge, e.g., a rising edge, of the clock signal CK. Thus, the output data at the data output terminal of the edge-triggered flip-flop 110 has a signal level that corresponds to a signal level of the input data at the data input terminal just before the triggering edge of the clock signal CK, and maintains the signal level unchanged for one clock cycle after the triggering edge of the clock signal CK. The data output terminal of the edge-triggered flip-flop 110 may include two complementary output terminals.

The clock gating circuit 330 performs combinational logical operations on the input data Di, the output data Do, and the clock signal CLK to generate the clock signal CK of the edge-triggered flip-flop 110.

The above-described clock gating circuit 330 generates the clock control signal EN_a with data comparison of the input data Di and the output data Do of the edge-triggered flip-flop 110, and controls transmission of the clock signal according to the state of the clock control signal EN_a.

The clock gating circuit 330 maintains the clock signal CK at a predetermined level in a clock cycle during which the input data Di remains unchanged. The clock gating circuit 330 copies the clock signal CLK as the clock signal CK in a clock cycle during which the input data Di is flipped. Therefore, the clock gating circuit 330 enables transmission of the clock signal CLK only in a clock cycle during which the input data Di of the edge-triggered flip-flop 110 is flipped, thus dynamic power consumption of the edge-triggered flip-flop 110 due to flipping of the clock signal CK can be minimized. Furthermore, the clock gating circuit 330 provides only one triggering edge at the next clock cycle following the clock cycle during which the input data Di of the edge-triggered flip-flop 110 is flipped, so that dynamic power consumption of the edge-triggered flip-flop 110 due to data transmission can be minimized.

Furthermore, the edge-triggered flip-flop 110 prevents the data from entering subsequent-stage digital circuits in most of the clock cycles during which the input data Di remains unchanged, so as to avoid additional data power consumption to be caused by date signal flipping performed by subsequent-stage combinational logic units.

FIG. 8 shows a schematic circuit diagram of a clock gating circuit in the flip-flop unit shown in FIG. 7. Referring to FIG. 7, the clock gating circuit 330 and the edge-triggered flip-flop 110 together constitute a flip-flop unit, and the clock gating circuit 330 provides the clock signal CK to the edge-triggered flip-flop 110.

The clock gating circuit 330 includes an XOR gate 331, a NOT gate 332, and an OR gate 333. In the clock gating circuit 330, a clock control signal EN_a is generated by comparing the input data Di and the output data Do of the edge-triggered flip-flop 110, and the clock signal CK is a result of a logical OR operation of the clock signal CLK and an inverted signal EN_b of the clock control signal EN_a.

The XOR gate 331 includes a first input terminal, a second input terminal, and an output terminal. The NOT gate 332 includes a input terminal and an output terminal. The OR gate 333 includes a first input terminal, a second input terminal, and an output terminal. The XOR gate 331 receives the input data Di of the edge-triggered flip-flop 110 at the first data input terminal, receives the output data Do of the edge-triggered flip-flop 110 at the second data input terminal, and provides the clock control signal EN_a at the output terminal. The NOT gate 332 is coupled between the output terminal of the XOR gate 331 and the second input terminal of the OR gate 331 for generating an inverted signal EN_b of the clock control signal EN_a. The OR gate 333 receives the clock signal CLK at the first input terminal. The OR gate 333 receives the inverted signal EN_b of the clock control signal EN_a at the second input terminal via the NOT gate 332. The OR gate 333 provides the clock signal CK at the output terminal.

In this embodiment, the edge-triggered flip-flop triggered by a rising edge is taken as an example, while the clock control signal EN_a indicates a valid state with a high level and an invalid state with a low level. Each clock cycle of the clock signal CLK includes a first-level phases T1 and a second-level phases T2 successively between adjacent rising edges. The first-level phases T1 and the second-level phases T2 have a high level and a low level, respectively. The clock signal CK provides a rising edge as a triggering edge of the edge-triggered flip-flop 110 at which the edge-triggered flip-flop 110 transmits the input data from the input terminal to the output terminal.

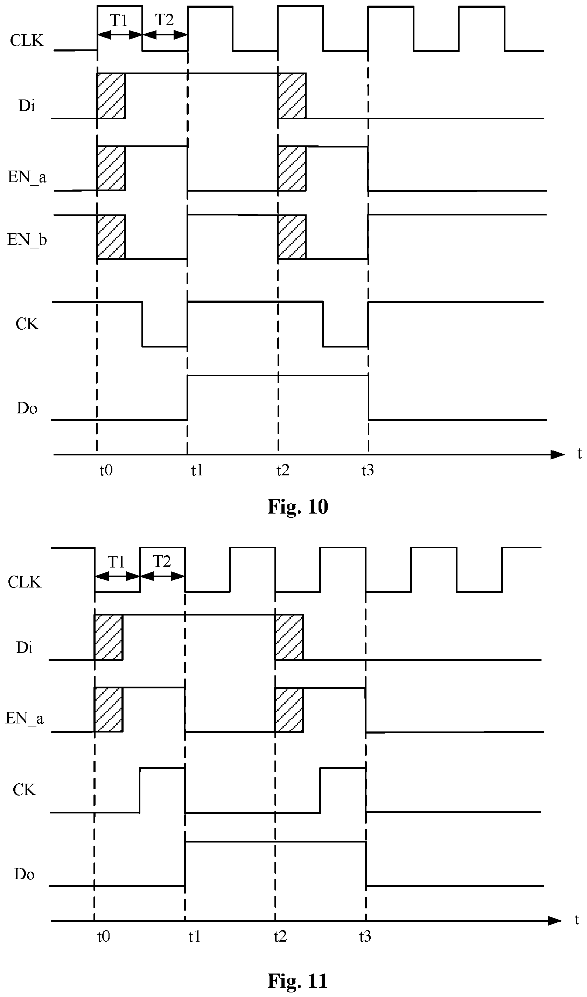

Referring to FIG. 10, the input data Di of the edge-triggered flip-flop 110 has signal delay Td with respect to an edge of the clock signal. A range between a minimum delay Tdmin and a maximum delay Tdmax of the signal delay Td is hatched. The signal delay Td of the input data Di of the edge-triggered flip-flop 110 varies between the minimum delay Tdmin and the maximum delay Tdmax.

In this embodiment, the clock control signal EN_a of the clock gating circuit is obtained by comparing the input data Di and the output data Do of the edge-triggered flip-flop 110, and the signal delay Td of the clock control signal EN_a is substantially the same as the signal delay Td of the input data Di.

With optimized circuit design and circuit simulation, the signal delay Td of the input data Di of the edge-triggered flip-flop 110 can be calculated and predetermined, such that a range between the minimum delay Tdmin and the maximum delay Tdmax of the signal delay Td falls within a selected first-level phase T1 of the clock signal CLK.

Accordingly, the range between the minimum delay Tdmin and the maximum delay Tdmax of the signal delay Td of the clock control signal EN_a falls within the first-level phase T1 of the clock signal CLK. Flipping of the clock control signal EN_a can only occur in the first-level phase T1 of the clock signal CLK. A starting edge of the first-level phase T1 is a rising edge.

At time t0, the clock signal CLK reaches a first rising edge and the clock signal CK is maintained at a high level as in the previous clock cycle.

The clock control signal EN_a is the result of a logical XOR operation of the input data Di and the output data Do of the edge-triggered flip-flop 110. In a clock cycle after time t0, the signal level of the input data Di of the edge-triggered flip-flop 110 is flipped from a low level to a high level when the signal delay Td elapses. The signal level of the output data Do is always at a low level in the entire clock cycle. As a result of the logical XOR operation, the clock control signal EN_a is flipped from a low level to a high level when the signal delay Td elapses, and the inverted signal EN_b of the clock control signal EN_a is flipped from a high level to a low level when the signal delay Td elapses.

The clock signal CK is the result of a logical OR operation of the inverted signal EN_b of the clock control signal EN_a and the clock signal CLK. In a clock cycle after time t0, the clock signal CK is a replica of the clock signal CLK. Although the inverted signal EN_b of the clock control signal EN_a has signal delay Td, the signal delay Td occurs in the first-level phase T1 of the clock signal CLK, and a glitch in the clock signal CK, which is otherwise possibly caused by the signal delay Td, can be eliminated by combinational logical operations.

Therefore, the clock gating circuit 330 copies the clock signal CLK as the clock signal CK in a clock cycle after time t0. Since the clock signal CK has a high level in the previous clock cycle, the clock signal CK fails to provide a triggering edge, i.e., a rising edge, of the edge-triggered flip-flop 110. The signal level of the output data Do of the edge-triggered flip-flop 110 corresponds to the signal level of the input data Di at the preceding triggering edge of the clock signal CK, for example, a low level as shown in FIG. 10.

At time t1, the clock signal CLK reaches a second rising edge, and the clock signal CK is flipped from a low level, at the second-level phase of the previous clock cycle, to a high level.

The clock control signal EN_a is the result of a logical XOR operation of the input data Di and the output data Do of the edge-triggered flip-flop 110. In a clock cycle from time t1, the signal level of the input data Di is maintained at a high level. The signal level of the output data Do is always at a high level. As a result of the logical XOR operation, the clock control signal EN_a is flipped from a high level to a low level at time t1 and is always at a low level in a clock cycle from time t1, and the inverted signal EN_b of the clock control signal EN_a is always at a high level in a clock cycle from time t1.

The clock signal CK is the result of a logical OR operation of the inverted signal EN_b of the clock control signal EN_a and the clock signal CLK. Therefore, at time t1, the clock signal CK is flipped from a low level to a high level and is maintained at a high level in a clock cycle from time t1.

Therefore, the clock gating circuit 330 maintains the clock signal CK at a high level for one clock cycle following time t1. Since the signal level during the second-level phase of the previous clock cycle of the clock signal CK is low, the clock signal CK provides a triggering edge, i.e., a rising edge, of the edge-triggered flip-flop 110. The signal level of the output data Do of the edge-triggered flip-flop 110 corresponds to the signal level of the input data Di at the triggering edge of the clock signal CK in the current clock cycle, for example, a high level as shown in FIG. 10.

At time t2, the clock signal CLK reaches a third rising edge, and the clock signal CK maintains the high level in the previous clock cycle.

The clock control signal EN_a is the result of a logical XOR operation of the input data Di and the output data Do of the edge-triggered flip-flop 110. In a clock cycle after time t2, the signal level of the input data Di of the edge-triggered flip-flop 110 is flipped from a high level to a low level when the signal delay Td elapses. The signal level of the output data Do is always at a high level in the clock cycle. As a result of the logical XOR operation, the clock control signal EN_a is flipped from a low level to a high level when the signal delay Td elapses, and the inverted signal EN_b of the clock control signal EN_a is flipped from a high level to a low level when the signal delay Td elapses.

The clock signal CK is the result of a logical OR operation of the inverted signal EN_b of the clock control signal EN_a and the clock signal CLK. Thus, in a clock cycle after time t2, the clock signal CK is a replica of the clock signal CLK. Although the inverted signal EN_b of the clock control signal EN_a has signal delay Td, the signal delay Td occurs in the first-level phase T1 of the clock signal CLK, and a glitch in the clock signal CK, which is otherwise possibly caused by the signal delay Td, can be eliminated by combinational logical operations.

Therefore, the clock gating circuit 330 copies the clock signal CLK as the clock signal CK in a clock cycle after time t2. Since the clock signal CK has a high level in the previous clock cycle, the clock signal CK fails to provide a triggering edge, i.e., a rising edge, of the edge-triggered flip-flop 110. The signal level of the output data Do of the edge-triggered flip-flop 110 corresponds to the signal level of the input data Di at the preceding triggering edge of the clock signal CK, for example, a high level as shown in FIG. 10.

At time t3, the clock signal CLK reaches a fourth rising edge, and the clock signal CK is flipped from a low level, at the second-level phase of the previous clock cycle, to a high level.

The clock control signal EN_a is the result of a logical XOR operation of the input data Di and the output data Do of the edge-triggered flip-flop 110. In a clock cycle from time t3, the signal level of the input data Di is maintained at a low level. The signal level of the output data Do is always at a low level. As a result of the logical XOR operation, the clock control signal EN_a is flipped from a high level to a low level at the time t3 and is always at a low level in a clock cycle from time t3, and the inverted signal EN_b of the clock control signal EN_a is always at a high level in a clock cycle from time t3.

The clock signal CK is the result of a logical OR operation of the inverted signal EN_b of the clock control signal EN_a and the clock signal CLK. Therefore, at time t3, the clock signal CK is flipped from a low level to a high level and is maintained at a high level in a clock cycle from time t3.

Therefore, the clock gating circuit 330 maintains the clock signal CK at a high level for one clock cycle following time t3. Since the signal level during the second-level phase of the previous clock cycle of the clock signal CK is low, the clock signal CK provides a triggering edge, i.e., a rising edge, of the edge-triggered flip-flop 110. The signal level of the output data Do of the edge-triggered flip-flop 110 corresponds to the signal level of the input data Di at the triggering edge of the clock signal CK in the current clock cycle, for example, a low level as shown in FIG. 10.

The above-described clock gating circuit 330 generates the clock control signal EN_a with data comparison of the input data Di and the output data Do of the edge-triggered flip-flop 110, and controls transmission of the clock signal according to the state of the clock control signal EN_a.

In successive clock cycles, if the input data Di of the edge-triggered flip-flop 110 remains unchanged, the output data Do of the edge-triggered flip-flop 110 will remain unchanged. The input data Di and the output data Do of the edge-triggered flip-flop 110 are identical to each other. The clock gating circuit 330 disables the clock signal CLK and maintains the clock signal CK at a high level. Therefore, the clock gating circuit 330 may disable clock flipping and data transmission of the edge-triggered flip-flop 110, thereby reducing dynamic power consumption of the edge-triggered flip-flop 110 due to the clock flipping and the data transmission.

In successive clock cycles, if the input data Di of the edge-triggered flip-flop 110 is flipped, the input data Di of the edge-triggered flip-flop 110 is flipped when the signal delay elapses in a clock cycle during which the input data Di is flipped, and the input data Di and Do change from being identical to each other to being different from each other. The clock gating circuit 330 copies the clock signal CLK as the clock signal CK and provides the triggering edge of the edge-triggered flip-flop in the next clock cycle. Thus, the clock gating circuit 330 can enable clock flipping of the edge-triggered flip-flop 110 in a single clock cycle and enable data transmission of the edge-triggered flip-flop 110 in a single clock cycle. Therefore, dynamic power consumption of the edge-triggered flip-flop 110 due to the clock flipping and the data transmission can be reduced.

The clock gating circuit 330 according to this embodiment omits the latch compared to the clock gating circuit 130 shown in FIG. 5. Even if the input data Di of the edge-triggered flip-flop 110 has signal delay Td, a glitch in the clock signal CK of the edge-triggered flip-flop 110 can be eliminated as long as the signal delay Td of the input data Di of the edge-triggered flip-flop 110 is predetermined with a minimum delay Tdmin and a maximum delay Tdmax both at the first-level phase of the clock signal CLK.

In the circuit design of the flip-flop unit, the clock gating circuit 330 merely needs to predetermine the signal delay of the input data Di of the edge-triggered flip-flop 110, so that the circuit structure and the circuit design of the flip-flop unit can be simplified. The clock gating circuit 330 uses less hardware logic and operates with lower power consumption.

In a flip-flop unit, any number of edge-triggered flip-flops 110 may share a clock gating circuit 330 to form a flip-flop group. In a case that the flip-flop group includes any number of edge-triggered flip-flops 110, the increased power consumption due to the power consumption of the clock gating circuit 330 itself is much less than the reduced power consumption of the edge-triggered flip-flops 110 by clock gating Thus, the flip-flop unit can always achieve the power consumption reduction.

FIG. 9 shows a schematic circuit diagram of another clock gating circuit in the flip-flop unit shown in FIG. 7. Referring to FIG. 7, the clock gating circuit 430 and the edge-triggered flip-flop 110 together constitute a flip-flop unit, and the clock gating circuit 430 provides a clock signal CK to the edge-triggered flip-flop 110.

The clock gating circuit 430 includes an XOR gate 431 and an AND gate 433. In the clock gating circuit 430, a clock control signal EN_a is generated by comparing the input data Di and the output data Do of the edge-triggered flip-flop 110. The clock signal CK is a logical AND operation result of the clock signal CLK and the clock control signal EN_a.

The XOR gate 431 includes a first input terminal, a second input terminal, and an output terminal. The AND gate 433 includes a first input terminal, a second input terminal, and an output terminal. The XOR gate 431 receives the input data Di of the edge-triggered flip-flop 110 at the first data input terminal, receives the output data Do of the edge-triggered flip-flop 110 at the second data input terminal, and provides the clock control signal EN_a at the output terminal. The AND gate 433 receives the clock signal CLK at the first input terminal. The second input terminal of the AND gate 433 is coupled to the output terminal of the XOR gate 431 to receive the clock control signal EN_a. The AND gate 433 provides the clock signal CK at the output terminal.

In this embodiment, a falling-edge-triggered flip-flop is taken as an example, while the clock control signal EN indicates a valid state with a high level and an invalid state with a low level. Each clock cycle of the clock signal CLK includes a first-level phase T1 and a second-level phase T2 successively between adjacent falling edges. The first-level phase T1 and the second-level phase T2 have a low level and a high level, respectively. The clock signal CK provides a falling edge as a triggering edge of the edge-triggered flip-flop 110 at which the edge-triggered flip-flop 110 transmits the input data from the input terminal to the output terminal.

Referring to FIG. 11, the input data Di of the edge-triggered flip-flop 110 has signal delay Td with respect to the edge of the clock signal. A range between a minimum delay Tdmin and a maximum delay Tdmax of the signal delay Td is hatched. The signal delay Td of the input data Di of the edge-triggered flip-flop 110 varies between the minimum delay Tdmin and the maximum delay Tdmax.

In this embodiment, the clock control signal EN_a of the clock gating circuit is obtained by comparing the input data Di and the output data Do of the edge-triggered flip-flop 110, and the signal delay Td of the clock control signal EN_a is substantially the same as the signal delay Td of the input data Di.

With optimized circuit design and circuit simulation, the signal delay Td of the input data Di of the edge-triggered flip-flop 110 can be calculated and predetermined, such that the minimum delay Tdmin and the maximum delay Tdmax of the signal delay Td falls within a selected first-level phase of the clock signal CLK.

Accordingly, the range between the minimum delay Tdmin and the maximum delay Tdmax of the signal delay Td of the clock control signal EN_a falls within the first-level phase T1 of the clock signal CLK. Flipping of the clock control signal EN_a can only occur in the first-level phase T1 of the clock signal CLK. A starting edge of the first-level phase T1 is a falling edge.

At time t0, the clock signal CLK reaches a first falling edge and the clock signal CK is maintained at a low level as in the previous clock cycle.

The clock control signal EN_a is the result of a logical XOR operation of the input data Di and the output data Do of the edge-triggered flip-flop 110. In a clock cycle after time t0, the signal level of the input data Di of the edge-triggered flip-flop 110 is flipped from a low level to a high level when the signal delay Td elapses. The signal level of the output data Do is always at a low level in the entire clock cycle. As a result of the logical XOR operation, the clock control signal EN_a is flipped from a low level to a high level when the signal delay Td elapses, and the clock control signal EN_a is flipped from a low level to a high level when the signal delay Td elapses.

The clock signal CK is a logical AND operation result of the clock control signal EN_a and the clock signal CLK. In a clock cycle after time t0, the clock signal CK is a replica of the clock signal CLK. Although the clock control signal EN_a has signal delay Td, the signal delay Td occurs in the first-level phase T1 of the clock signal CLK, and a glitch in the clock signal CK, which is otherwise possibly caused by the signal delay Td, can be eliminated by combinational logical operations.

Therefore, the clock gating circuit 430 copies the clock signal CLK as the clock signal CK in a clock cycle after time t0. Since the clock signal CK has a low level in the previous clock cycle, the clock signal CK fails to provide the triggering edge of the edge-triggered flip-flop 110, i.e., the falling edge. The signal level of the output data Do of the edge-triggered flip-flop 110 corresponds to the signal level of the input data Di at the preceding triggering edge of the clock signal CK, for example, a low level as shown in FIG. 11.

At time t1, the clock signal CLK reaches a second falling edge, and the clock signal CK is flipped from a high level to a low level during the second-level phase of the previous clock cycle.

The clock control signal EN_a is the result of a logical XOR operation of the input data Di and the output data Do of the edge-triggered flip-flop 110. In a clock cycle from time t1, the signal level of the input data Di is maintained at a high level. The signal level of the output data Do is always at a high level. As a result of the logical XOR operation, the clock control signal EN_a is flipped from a high level to a low level at time t1 and is always at a low level in a clock cycle from time t1.

The clock signal CK is a logical AND operation result of the clock control signal EN_a and the clock signal CLK. Therefore, at time t1, the clock signal CK is flipped from a high level to a low level and is maintained at a low level in a clock cycle from time t1.

Therefore, the clock gating circuit 430 maintains the clock signal CK at a low level for one clock cycle following time t1. Since the signal level during the second-level phase of the previous clock cycle of the clock signal CK is high, the clock signal CK provides a triggering edge, i.e., a falling edge, of the edge-triggered flip-flop 110. The signal level of the output data Do of the edge-triggered flip-flop 110 corresponds to the signal level of the input data Di at the triggering edge of the clock signal CK in the current clock cycle, for example, a high level as shown in FIG. 11.

At time t2, the clock signal CLK reaches a third falling edge and the clock signal CK maintains the low level in the previous clock cycle.

The clock control signal EN_a is the result of a logical XOR operation of the input data Di and the output data Do of the edge-triggered flip-flop 110. In a clock cycle after time t2, the signal level of the input data Di of the edge-triggered flip-flop 110 is flipped from a high level to a low level when the signal delay Td elapses. The signal level of the output data Do is always at a high level in the clock cycle. As a result of the logical XOR operation, the clock control signal EN_a is flipped from a low level to a high level when the signal delay Td elapses.

The clock signal CK is a logical AND operation result of the clock control signal EN_a and the clock signal CLK. Thus, in a clock cycle after time t2, the clock signal CK is a replica of the clock signal CLK. Although the clock control signal EN_a has signal delay Td, the signal delay Td occurs in the first-level phase T1 of the clock signal CLK, and a glitch in the clock signal CK, which is otherwise possibly caused by the signal delay Td, can be eliminated by combinational logical operations.

Therefore, the clock gating circuit 430 copies the clock signal CLK as the clock signal CK in a clock cycle from time t2. Since the clock signal CK has a low level in the previous clock cycle, the clock signal CK fails to provide the triggering edge of the edge-triggered flip-flop 110, i.e., the falling edge. The signal level of the output data Do of the edge-triggered flip-flop 110 corresponds to the signal level of the input data Di at the preceding triggering edge of the clock signal CK, for example, a high level as shown in FIG. 11.

At time t3, the clock signal CLK reaches a fourth falling edge, and the clock signal CK is flipped from a high level to a low level during the second-level phase of the previous clock cycle.

The clock control signal EN_a is the result of a logical XOR operation of the input data Di and the output data Do of the edge-triggered flip-flop 110. In a clock cycle from time t3, the signal level of the input data Di is maintained at a low level. The signal level of the output data Do is always at a low level. As a result of the logical XOR operation, the clock control signal EN_a is flipped from a high level to a low level at time t3 and is always at a low level in a clock cycle from time t3.

The clock signal CK is a logical AND operation result of the clock control signal EN_a and the clock signal CLK. Therefore, at time t3, the clock signal CK is flipped from a high level to a low level and is maintained at a low level in a clock cycle from time t3.

Therefore, the clock gating circuit 430 maintains the clock signal CK at a low level for one clock cycle following time t3. Since the signal level during the second-level phase of the previous clock cycle of the clock signal CK is high, the clock signal CK provides a triggering edge, i.e., a falling edge, of the edge-triggered flip-flop 110. The signal level of the output data Do of the edge-triggered flip-flop 110 corresponds to the signal level of the input data Di at the triggering edge of the clock signal CK in the current clock cycle, for example, a low level as shown in FIG. 11.

The above-described clock gating circuit 430 generates the clock control signal EN_a with data comparison of the input data Di and the output data Do of the edge-triggered flip-flop 110, and controls transmission of the clock signal according to the state of the clock control signal EN_a.

In successive clock cycles, if the input data Di of the edge-triggered flip-flop 110 remains unchanged, the output data Do of the edge-triggered flip-flop 110 will remain unchanged. The input data Di and the output data Do of the edge-triggered flip-flop 110 are identical to each other. The clock gating circuit 430 disables the clock signal CLK and maintains the clock signal CK at a low level. Therefore, the clock gating circuit 430 may disable clock flipping and data transmission of the edge-triggered flip-flop 110, thereby reducing dynamic power consumption of the edge-triggered flip-flop 110 due to the clock flipping and the data transmission.

In successive clock cycles, if the input data Di of the edge-triggered flip-flop 110 is flipped, the input data Di of the edge-triggered flip-flop 110 is flipped when the signal delay elapses in a clock cycle during which the input data Di is flipped, and the input data Di and Do change from being identical to each other to being different from each other. The clock gating circuit 430 copies the clock signal CLK as the clock signal CK and provides the triggering edge of the edge-triggered flip-flop in the next clock cycle. Thus, the clock gating circuit 430 can enable clock flipping of the edge-triggered flip-flop 110 in a single clock cycle and enable data transmission of the edge-triggered flip-flop 110 in a single clock cycle. Therefore, dynamic power consumption of the edge-triggered flip-flop 110 due to the clock flipping and the data transmission can be reduced.

The clock gating circuit 430 according to this embodiment omits the latch compared to the clock gating circuit 130 shown in FIG. 5. Even if the input data Di of the edge-triggered flip-flop 110 has signal delay Td, a glitch in the clock signal CK of the edge-triggered flip-flop 110 can be eliminated as long as the signal delay Td of the input data Di of the edge-triggered flip-flop 110 is predetermined with a minimum delay Tdmin and a maximum delay Tdmax both at the first-level phase of the clock signal CLK.

In the circuit design of the flip-flop unit, the clock gating circuit 430 merely needs to predetermine the signal delay of the input data Di of the edge-triggered flip-flop 110, so that the circuit structure and the circuit design of the flip-flop unit can be simplified. The clock gating circuit 430 uses less hardware logic and operates with lower power consumption.

In a flip-flop unit, any number of edge-triggered flip-flops 110 may share a clock gating circuit 430 to form a flip-flop group. In a case that the flip-flop group includes any number of edge-triggered flip-flops 110, the increased power consumption due to the power consumption of the clock gating circuit 430 itself is much less than the reduced power consumption of the edge-triggered flip-flops 110 by clock gating Thus, the flip-flop unit can always achieve the power consumption reduction.

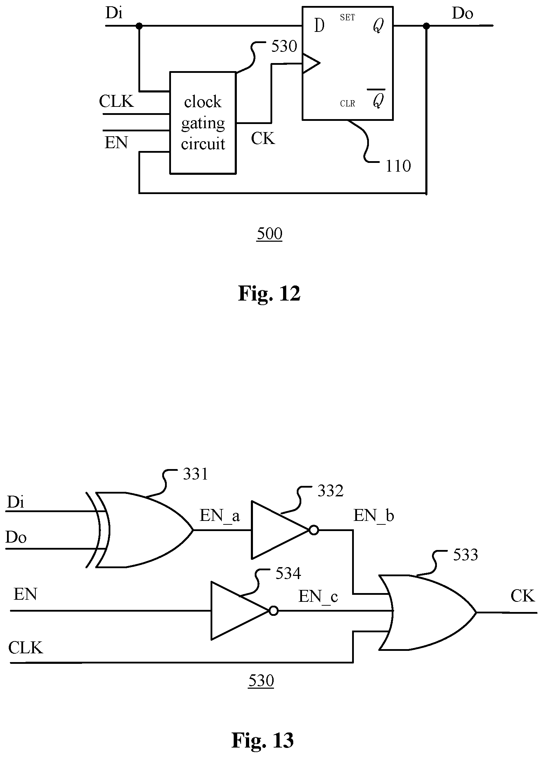

FIG. 12 shows a schematic circuit diagram of a flip-flop unit according to a second embodiment of the disclosure. The flip-flop unit 500 includes an edge-triggered flip-flop 110 and a clock gating circuit 530. The clock gating circuit 530 is used for gating a clock signal CK of the edge-triggered flip-flop 110. In this embodiment, the edge-triggered flip-flop 110 is, for example, a D-type flip-flop.

The edge-triggered flip-flop 110 includes a data input terminal, a data output terminal, and a clock input terminal. The clock gating circuit 530 includes a first input terminal, a second input terminal, a clock input terminal, a clock output terminal, and a control terminal. The clock gating circuit 530 receives the input data Di at the first input terminal, receives the output data Do at the second input terminal, receives the second clock control signal EN at the control terminal, receives the clock signal CLK at the clock input terminal, and provides the clock signal CK at the clock output terminal. The edge-triggered flip-flop 110 receives the input data Di at the data input terminal, receives the clock signal CK at the clock input terminal, and provides the output data Do at the data output terminal.

The edge-triggered flip-flop 110 transmits the input data from the data input terminal to the data output terminal at a triggering edge, e.g., a rising edge, of the clock signal CK. Thus, the output data at the data output terminal of the edge-triggered flip-flop 110 has a signal level that corresponds to a signal level of the input data at the data input terminal just before the triggering edge of the clock signal CK, and maintains the signal level unchanged for one clock cycle after the triggering edge of the clock signal CK. The data output terminal of the edge-triggered flip-flop 110 may include two complementary output terminals.

The clock gating circuit 530 performs combinational logical operations on the input data Di, the output data Do, the second clock control signal EN, and the clock signal CLK to generate the clock signal CK of the edge-triggered flip-flop 110.

The above-described clock gating circuit 530 generates the first clock control signal EN_a with data comparison of the input data Di and the output data Do of the edge-triggered flip-flop 110, and controls transmission of the clock signal according to the states of the first clock control signal EN_a and the received second clock control signal EN.

The second clock control signal EN includes, for example, a plurality of clock cycles each of which has a valid phase and an invalid phase. When the second clock control signal EN is valid, the clock gating circuit 530 disables data comparison, and the clock gating circuit 530 copies the clock signal CLK as the clock signal CK. When the second clock control signal EN is invalid, the clock gating circuit 530 enables data comparison, and controls transmission of the clock signal according to the comparison.

In a case that the clock gating circuit 530 enables data comparison, the clock gating circuit 530 maintains the clock signal CK at a predetermined level in clock cycles during which the input data Di remains unchanged. The clock gating circuit 530 copies the clock signal CLK as the clock signal CK in a clock cycle during which the input data Di is flipped. Therefore, the clock gating circuit 530 enables transmission of the clock signal CLK only in a clock cycle during which the input data Di of the edge-triggered flip-flop 110 is flipped, and thus dynamic power consumption of the edge-triggered flip-flop 110 due to flipping of the clock signal CK can be minimized. Furthermore, the clock gating circuit 530 provides only one triggering edge at the next clock cycle following the clock cycle during which the input data Di of the edge-triggered flip-flop 110 is flipped, so that dynamic power consumption of the edge-triggered flip-flop 110 due to data transmission can be minimized.

Furthermore, the edge-triggered flip-flop 110 prevents the data from entering subsequent-stage digital circuits in most of the clock cycles during which the input data Di remains unchanged, so as to avoid additional data power consumption to be caused by date signal flipping performed by subsequent-stage combinational logic units.

FIG. 13 shows a schematic circuit diagram of a clock gating circuit in the flip-flop unit shown in FIG. 12. Referring to FIG. 12, the clock gating circuit 530 and the edge-triggered flip-flop 110 together constitute a flip-flop unit, and the clock gating circuit 530 provides a clock signal CK to the edge-triggered flip-flop 110.

The clock gating circuit 530 includes an XOR gate 331, a NOT gate 332, an OR gate 533, and a NOT gate 534. In the clock gating circuit 530, a clock control signal EN_a is generated by comparing the input data Di and the output data Do of the edge-triggered flip-flop 110. The clock signal CK is a logical OR operation result of the clock signal CLK, the inverted signal EN_b of the first clock control signal EN_a, and the received second clock control signal EN.

The XOR gate 331 includes a first input terminal, a second input terminal, and an output terminal. The NOT gates 332 and 534 include a input terminal and an output terminal, respectively. The AND gate 533 includes a first input terminal, a second input terminal, a third input terminal, and an output terminal. The XOR gate 331 receives the input data Di of the edge-triggered flip-flop 110 at the first data input terminal, receives the output data Do of the edge-triggered flip-flop 110 at the second data input terminal, and provides the first clock control signal EN_a at the output terminal. The NOT gate 332 is coupled between the output terminal of the XOR gate 331 and the second input terminal of the OR gate 331 for generating an inverted signal EN_b of the first clock control signal EN_a. The OR gate 533 receives the clock signal CLK at the first input terminal. The OR gate 533 receives an inverted signal EN_b of the first clock control signal EN_a via the NOT gate 332 at the second input terminal. The OR gate 533 receives the inverted signal EN_c of the second clock control signal EN via the NOT gate 534 at the third input terminal. The OR gate 533 provides the clock signal CK at the output terminal.

The operation principle of the clock gating circuit 530 used in the flip-flop unit according to the second embodiment is substantially the same as that of the clock gating circuit 330 used in the flip-flop unit according to the first embodiment, and will not be described in detail here.

The clock gating circuit 530 according to this embodiment omits the latch compared to the clock gating circuit 130 shown in FIG. 5. The clock gating circuit 530 enables or disables data comparison function according to the received second clock control signal EN. When the second clock control signal EN is valid, the clock gating circuit 530 enables data comparison function, and when the second clock control signal EN is invalid, the clock gating circuit 530 disables data comparison function. In a case that the data comparison function is enabled, even if the input data Di of the edge-triggered flip-flop 110 has signal delay Td, the glitch in the clock signal CK of the edge-triggered flip-flop 110 can be eliminated, as long as the signal delay Td of the input data Di of the edge-triggered flip-flop 110 is predetermined with a minimum delay Tdmin and a maximum delay Tdmax both at the first-level phase of the clock signal CLK.

In the circuit design of the flip-flop unit, the clock gating circuit 530 merely needs to predetermine the signal delay of the input data Di of the edge-triggered flip-flop 110, so that the circuit structure and the circuit design of the flip-flop unit can be simplified. The clock gating circuit 530 uses less hardware logic and operates with lower power consumption.

In a flip-flop unit, any number of edge-triggered flip-flops 110 may share a clock gating circuit 530 to form a flip-flop group. In a case that the flip-flop group includes any number of edge-triggered flip-flops 110, the increased power consumption due to the power consumption of the clock gating circuit 530 itself is much less than the reduced power consumption of the edge-triggered flip-flops 110 by clock gating Thus, the flip-flop unit can always achieve the power consumption reduction.

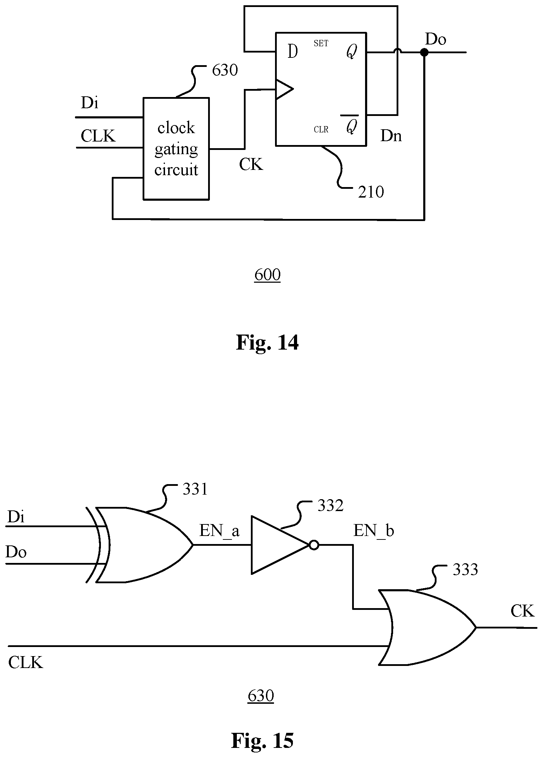

FIG. 14 shows a schematic circuit diagram of a flip-flop unit according to a third embodiment of the present disclosure. The flip-flop unit 600 includes an edge-triggered flip-flop 210 and a clock gating circuit 630. The clock gate circuit 630 is used for gating a clock signal CK of edge-triggered flip-flop 210. In this embodiment, the edge-triggered flip-flop 210 is, for example, a D-type flip-flop.

The edge-triggered flip-flop 210 includes a data input terminal, a first data output terminal, a second data output terminal, and a clock input terminal. The clock gating circuit 630 includes a first input terminal, a second input terminal, a clock input terminal, and a clock output terminal. The clock gating circuit 630 receives the input data Di at the first input terminal, receives the output data Do at the second input terminal, receives the clock signal CLK at the clock input terminal, and provides the clock signal CK at the clock output terminal. The edge-triggered flip-flop 210 receives the input data Di at the data input terminal, receives the clock signal CK at the clock input terminal, provides the output data Do at the first data output terminal, and provides an inverted signal Dn of the output data Do at the second data output terminal.

In this embodiment, the first data output terminal and the second data output terminal of the edge-triggered flip-flop 210 are two complementary output terminals. Since the data input terminal of the edge-triggered flip-flop 210 is coupled to the second data output terminal, the edge-triggered flip-flop 210 always receives the inverted signal Dn of the output data Do as input data.

At a triggering edge of the clock signal CK, e.g., a rising edge, the edge-triggered flip-flop 210 transmits the input data from the data input terminal to the data output terminal. Thus, a signal level of the output data at the data output terminal of the edge-triggered flip-flop 210 depends on a signal level of the input data at the data input terminal just before the triggering edge of the clock signal CK, and maintains the signal level unchanged for one clock cycle after the triggering edge of the clock signal CK.

The clock gating circuit 630 performs combinational logical operations on the input data Di, the output data Do, and the clock signal CLK to generate the clock signal CK of the edge-triggered flip-flop 210.

The above-described clock gating circuit 630 generates the clock control signal EN_a with data comparison of the input data Di and the output data Do of the edge-triggered flip-flop 210, and controls transmission of the clock signal according to the state of the clock control signal EN_a.

The clock gating circuit 630 maintains the clock signal CK at a predetermined level in clock cycles during which the input data Di remains unchanged. The clock gating circuit 630 copies the clock signal CLK as the clock signal CK in a clock cycle during which the input data Di is flipped. Therefore, the clock gating circuit 630 enables transmission of the clock signal CLK only in a clock cycle during which the input data Di of the edge-triggered flip-flop 210 is flipped, and thus dynamic power consumption of the edge-triggered flip-flop 210 due to flipping of the clock signal CK can be minimized. Furthermore, the clock gating circuit 630 provides only one triggering edge in the next clock cycle following the clock cycle during which the input data Di of the edge-triggered flip-flop 210 is flipped, so that dynamic power consumption of the edge-triggered flip-flop 210 due to data transmission can be minimized. At the triggering edge of the clock signal CK, the edge-triggered flip-flop 210 provides the inverted signal of the output data Do as the input data to the input terminal and then to the output terminal. Furthermore, the edge-triggered flip-flop 210 prevents data from entering subsequent-stage digital circuits in other cases, so as to avoid additional data power consumption to be caused by data signal flipping performed by subsequent-stage combinational logic units.

FIG. 15 shows a schematic circuit diagram of a clock gating circuit in the flip-flop unit shown in FIG. 14. Referring to FIG. 14, the clock gating circuit 630 and the edge-triggered flip-flop 210 together constitute a flip-flop unit, and the clock gating circuit 630 provides the clock signal CK to the edge-triggered flip-flop 210.

The clock gating circuit 630 includes an XOR gate 331, a NOT gate 332, and an OR gate 533. In the clock gating circuit 630, a clock control signal EN_a is generated by comparing the input data Di and the output data Do of the edge-triggered flip-flop 210. The clock signal CK is a logical OR operation result of the clock signal CLK and the inverted signal EN_b of the clock control signal EN_a.

The operation principle of the clock gating circuit 630 used in the flip-flop unit according to the third embodiment is substantially the same as that of the clock gating circuit 330 used in the flip-flop unit according to the first embodiment, and will not be described in detail here.

Furthermore, the operation principle of the edge-triggered flip-flop 210 in the flip-flop unit according to the third embodiment is substantially the same as the operation principle of the edge-triggered flip-flop 110 used in the flip-flop unit according to the first embodiment, and only the main differences between them are described here.

The flip-flop unit 600 according to the third embodiment receives the input data Di, which is only used for clock gating. The edge-triggered flip-flop 210 generates the input data according to the output data Dn, so the edge-triggered flip-flop 210 does not need to receive any input data from the outside. For example, the data input terminal of the edge-triggered flip-flop is coupled to the second data output terminal to receive the inverted signal Dn of the output data as the input data.

The clock gating circuit 630 according to this embodiment omits the latch compared to the clock gating circuit 130 shown in FIG. 5. Even if the input data Di of the edge-triggered flip-flop 210 has signal delay Td, a glitch in the clock signal CK of the edge-triggered flip-flop 210 can be eliminated as long as the signal delay Td of the input data Di of the edge-triggered flip-flop 110 is predetermined with a minimum delay Tdmin and a maximum delay Tdmax both at the first-level phase of the clock signal CLK.

Since the edge-triggered flip-flop 210 generates the input data according to the output data Dn of the edge-triggered flip-flop 210, the edge-triggered flip-flop 210 does not need to receive any input data from the outside, so that an adverse effect of the signal delay fluctuation of the input data from the outside on the operation stability of the edge-triggered flip-flop 210 can be reduced.

The clock gating circuit 630 merely needs to predetermine the signal delay of the input data Di of the edge-triggered flip-flop 210 Thus, the circuit structure and the circuit design of the flip-flop unit can be simplified. The clock gating circuit 630 uses less hardware logic and operates with lower power consumption.

In a flip-flop unit, any number of edge-triggered flip-flops 210 may share a clock gating circuit 630 to form a flip-flop group. In a case that the flip-flop group includes any number of edge-triggered flip-flops 210, the increased power consumption due to the power consumption of the clock gating circuit 630 itself is much less than the reduced power consumption of the edge-triggered flip-flops 210 by clock gating Thus, the flip-flop unit can always achieve the power consumption reduction.

In the above flip-flop unit, the flip-flop, which is triggered at a rising edge or a falling edge of the clock signal, is taken as an example for illustration. The edge-triggered flip-flop in the flip-flop unit is described with only specific structures. However, the present disclosure is not limited thereto. It is understood that other types of edge-triggered flip-flops, such as an edge-triggered flip-flop with a reset function, is also applicable to the present disclosure to have technical benefits.

It should be noted that, in this document, relational terms such as first and second are used only to distinguish one entity or operation from another, and do not necessarily require or imply the existence of any such actual relationship or order between those entities or operations. Furthermore, the terms "including", "comprising", or any other variant thereof, are intended to cover non-exclusive inclusion, such that a process, method, article, or apparatus comprising a set of elements includes not only those elements, but also other elements not expressly listed, or other elements that are not expressly listed for the purpose of such a process, method, article or apparatus, or other elements that are not expressly listed for the purpose of such a process, method, article or equipment. elements, or also includes elements that are inherent to such process, method, article or apparatus. Without further limitation, the fact that an element is defined by the phrase "includes a ..." does not preclude the existence of additional identical elements in the process, method, article or apparatus that includes said element.

While embodiments according to the present disclosure are described above, these embodiments are not exhaustive of all details, nor are the disclosure limited to the specific embodiments described. Obviously, many modifications and variations are possible in light of the above description. These embodiments were chosen and described in detail in order to best explain the principles of the disclosure and its practical application, to thereby enable others skilled in the art to best utilize the disclosure and to make modifications of the disclosure. The disclosure is to be limited only by the claims and their full scope and equivalents.

## Claims

1. A flip-flop unit, comprising:
an edge-triggered flip-flop having a data input terminal, a clock input terminal, and a first data output terminal, and
a clock gating circuit having a first input terminal, a second input terminal, a clock input terminal and an output terminal,
wherein the first input terminal of the clock gating circuit receives input data of the edge-triggered flip-flop, the second input terminal of the clock gating circuit receives output data of the edge-triggered flip-flop, the clock input terminal of the clock gating circuit receives a first clock signal, and the output terminal of the clock gating circuit is coupled to the clock input terminal of the edge-triggered flip-flop to provide a second clock signal, the clock gating circuit enables or disables the first clock signal to generate the second clock signal according to a data comparison result of the input data and the output data, so that the second clock signal provides a triggering edge of the edge-triggered flip-flop, the clock gating circuit copies the first clock signal as the second clock signal in a clock cycle during which the input data is flipped, and maintains the second clock signal at a predetermined level in clock cycles during which the input data remains unchanged.

2. The flip-flop unit according to claim 1, wherein each clock cycle of the first clock signal has a first-level phase and a second-level phase successively, and the input data is flipped in the first-level phase of the first clock signal.

3. The flip-flop unit according to claim 2, wherein the predetermined level is a level of the first-level phase, and the second clock signal provides a triggering edge in the next clock cycle following the clock cycle during which the input data is flipped.

4. The flip-flop unit according to claim 2, wherein a starting edge of the first-level phase is a rising edge.

5. The flip-flop unit according to claim 4, wherein the clock gating circuit comprises:
an XOR gate having a first input terminal, a second input terminal and an output terminal,
the first input terminal and the second input terminal respectively receiving the input data and the output data of the edge-triggered flip-flop, and the output terminal providing a first clock control signal;
an OR gate having a first input terminal, a second input terminal, and an output terminal, the first input terminal receiving the first clock signal, and
a NOT gate having an input terminal and an output terminal, the NOT gate being coupled between the output terminal of the XOR gate and the second input terminal of the OR gate,
wherein the first clock control signal is inverted by the NOT gate and the inverted first clock control signal is provided to the second input terminal of the OR gate, and the second clock signal is provided by the output terminal of the OR gate.

6. The flip-flop unit according to claim 5, wherein the OR gate further comprises a third input terminal receiving an inverted signal of the second clock control signal.

7. The flip-flop unit according to claim 6, wherein the clock gating circuit enables a data comparison function when the second clock control signal is valid, and the clock gating circuit disables data comparison function when the second clock control signal is invalid.

8. The flip-flop unit according to claim 2, wherein a starting edge of the first-level phase is a falling edge.

9. The flip-flop unit according to claim 8, wherein the clock gating circuit comprises:
an XOR gate having a first input terminal, a second input terminal, and an output terminal, the first input terminal and the second input terminal receiving the input data and the output data of the edge-triggered flip-flop, respectively, and the output terminal providing a first clock control signal; and
an AND gate having a first input terminal, a second input terminal, and an output terminal, the first input terminal receiving the first clock signal, the second input terminal receiving the first clock control signal, and the output terminal providing the second clock signal.

10. The flip-flop unit according to claim 9, wherein the AND gate further comprises a third input terminal, and the third input terminal receives a second clock control signal.

11. The flip-flop unit according to claim 10, wherein the clock gating circuit enables a data comparison function when the second clock control signal is valid, and the clock gating circuit disables data comparison function when the second clock control signal is invalid.

12. The flip-flop unit according to claim 5 or 9, wherein the data input terminal of the edge-triggered flip-flop receives an inverted signal of the output data as input data.

13. The flip-flop unit according to claim 12, wherein the edge-triggered flip-flop further comprises a second data output terminal, and provides the output data of the edge-triggered flip-flop at the first data output terminal, and provides the inverted signal of the output data at the second data output terminal,
wherein the data input terminal and the second data output terminal of the edge-triggered flip-flop are coupled to each other to receive the inverted signal of the output data.

14. The flip-flop unit according to claim 6 or 10, wherein each of the first clock control signal and the second clock control signal indicates a valid state with a high level and an invalid state with a low level.

15. The flip-flop unit according to claim 1, wherein the edge-triggered flip-flop receives the input data at the data input terminal and transmits the input data to the first data output terminal at the triggering edge.

16. The flip-flop unit according to claim 1, wherein the flip-flop unit is a library cell in a standard cell library of an EDA tool of digital circuits.
